# EUROPÄISCHE PATENTSCHRIFT

(11) **EP 1 360 433 B1**
(45) Veröffentlichungstag und Bekanntmachung des Hinweises auf die Patenterteilung: **14.09.2005**
(21) Anmeldenummer: 01984710.2
(22) Anmeldetag: 14.12.2001
(51) Int. Cl.: F16H 19/00

(54) **STELLANTRIEB MIT BEGRENZTER STELLSTRECKE UND NOT-ENTKOPPLUNG**
ACTUATOR WITH LIMITED TRAVEL AND EMERGENCY UNCOUPLING
MECANISME DE COMMANDE A DISTANCE DE COMMANDE LIMITEE ET SYSTEME DE DECOUPLAGE D'URGENCE

(30) Priorität: 05.02.2001 DE 10105032
(43) Veröffentlichungstag der Anmeldung: 12.11.2003
(73) Patentinhaber: ROBERT BOSCH GMBH, 70442 Stuttgart (DE)
(72) Erfinder: NEUBAUER, Achim, 76547 Sinzheim-Vormberg (DE); ASCHOFF, Joerg, 77815 Buehl (DE); DILGER, Werner, 77815 Buehl (DE); PIERENKEMPER, Rolf, 77830 Bühlertal (DE); BOLZ, Martin-Peter, 77815 Buehl (DE)
(86) Internationale Anmeldenummer: PCT/DE2001/004759
(87) Internationale Veröffentlichungsnummer: WO 2002/063183

(56) Entgegenhaltungen:
- EP-A- 1 044 832
- NL-A- 8 104 770
- US-A- 4 258 580
- US-A- 4 767 955

## Beschreibung

### Technisches Gebiet

Bei heute eingesetzten Stellantrieben zum Betätigen von Kupplungen oder Getrieben werden üblicherweise Elektromotoren eingesetzt. Auf deren Ankerwelle ist zum Beispiel eine Schnecke angeformt. Diese Schnecke arbeitet mit einem Schneckenrad und gegebenenfalls weiteren vorgesehenen Getriebestufen zusammen. Schneckentriebe sind in der Regel so ausgelegt, daß eine Selbsthemmung vorliegt; d.h. eine einmal eingenommene Stellposition zwischen Schnecke und Schneckenrad kann nur mit erheblichem Kraftaufwand verändert bzw. wieder aufgehoben werden. Damit ist bei Stromausfall am den Schneckentrieb antreibenden Stellantrieb eine notwendig gewordene vorzunehmende Verstellung nur mit erhöhtem Aufwand zu realisieren.

### Stand der Technik

In Fahrzeugen, die mit Verbrennungskraftmaschinen angetrieben werden, seien es Nutzfahrzeuge oder Personenwagen, können Abgasturbolader eingesetzt werden, um während des Ansaugtaktes der Verbrennungskraftmaschine eine bessere Gasfüllung der einzelnen Zylinder der Verbrennungskraftmaschine, sei es eine direkteinspritzende Verbrennungskraftmaschine - sei es eine gemischverdichtende, fremdgezündete Verbrennungskraftmaschine, zu erreichen. Werden Abgasturbolader über einen Elektromotor, einen Schneckentrieb aus Schnecke und Schneckenrad bestehend, verstellt und/oder mit einer Zahnstangen-Ritzelanordnung versehen, läßt sich am Abtrieb neben einer Linear- auch eine Rotationsbewegung erzeugen, über welche die Leitschaufelringe eines Abgasturboladers verstellt und dessen Betriebsverhalten und Wirksamkeit beeinflußt werden kann. Ein Stromausfall am Stellantrieb stellt ein erhebliches Problem dar, da auch bei Stromausfall eine Verstellung am Abgasturbolader, um ein Beispiel zu nennen, gewährleistet sein muß. So muß sich ein mittels eines elektrischen Stellantriebes betätigbarer Abgasturbolader mit variabler Turbinengeometrie bei geschlossener Leitschaufelstellung, der in diesem Zustand das Passieren eines Abgasstromes verhindert, bei Stromausfall am ihm zugeordneten Stellantrieb rasch wieder öffnen lassen können. Ein rasches Öffnen des Leitschaufelringes ist gefordert, wenn an der Verbrennungskraftmaschine, in deren Abgassystem der Abgasturbolader aufgenommen ist, wieder schlagartig Gas gegeben wird. In diesem Zustand könnte der Abgasstrom, der sich bei der Strömung durch die Abgasturbine entspannt, bei geschlossenem Leitschaufelring jedoch an einer Passage der Strömungsmaschine am Abgasturbolader gehindert ist, erheblichen Schaden stiften.

Das Dokument US4258580 offenbart einen Stellantrieb nach dem Oberbegriff des Anspruchs 1.

Mit den heute eingesetzten Stellantrieben ist die Reaktion auf einen Stromausfall an einem Stellantrieb, der eine Tendenz zur Selbsthemmung aufweist, äußerst schwierig vorzunehmen.

### Darstellung der Erfindung

Das obengenannte Problem wird durch einen Stellantrieb nach Anspruch 1 gelöst.

Die erfindungsgemäß vorgeschlagene Lösung erlaubt in einem Stellbereich des Stellantriebes keine Kraftübertragung auf das Stellglied. Es ist ein ohne Strom funktionierendes Stellglied vorhanden, welches bei Stromausfall eine Rest-Verstellbarkeit gewährleistet. Dies kann durch Modifikationen an bisher eingesetzten Stellantrieben erzielt werden; mit der erfindungsgemäß vorgeschlagenen Lösung kann bei Stromausfall der Zustand "offen " am zu betätigenden Stellglied schnell herbeigeführt werden, da nur kurze Drehwege auszuführen sind. Mit der erfindungsgemäß vorgeschlagenen Anordnung läßt sich einem Antrieb eine Feder parallel schalten, die den Antrieb des Stellgliedes unterstützt; so kann zum Beispiel zusammen mit dem Elektromotor der Leitschaufelring eines Turboladers beim Bremsen geschlossen gehalten werden.

Die erfindungsgemäß vorgeschlagene Entkopplung von Stellelementen von Stellgliedern gestattet eine Weiterverwendung von Gleichteilen bei Antriebskomponenten, da an bekannten, bisher eingesetzten Antriebsmotoren nur geringfügige Modifikationen vorzunehmen sind, was eine Einsparung von Umrüstkosten als Vorteil nach sich zieht.

Die erfindungsgemäß vorgeschlagene Lösung gestattet eine Entkopplung von Stellgliedern über den gesamten Drehweg eines Stellgliedes. Damit ist der Rückstelleffekt durch das parallel zum Stellantrieb vorgesehene Federelement, bezogen auf eine volle Umdrehung des beaufschlagten Stellgliedes, sowohl vor der Zugrichtungsumkehr als auch nach der Zugrichtungsumkehr des Federelementes während der Rotation des Stellgliedes gewährleistet. Dies wird dadurch erreicht, daß das Federelement über einen, in einer Nut des Stellgliedes geführten Stift bewegbar gehalten ist und mit ihrem anderen Ende an einem fixen, jedoch drehbaren Punkt gelagert ist. Bei Normalbetrieb, bei welchem ein über das Stellglied beaufschlagtes Stellelement zwischen zwei Extrempositionen hin- und herbewegt wird, ist die Feder stets gespannt. Bei der Umdrehung des Stellgliedes verstellt sich der im Stellglied verfahrbar geführte Anlenkpunkt des Federelementes, so daß nach einer halben Umdrehung des Stellgliedes eine maximale Spannung im Federelement vorliegt. Fällt in dieser Rotationslage der Strom am Antriebsmotor aus, kann die im Federelement gespeicherte Energie des Federelementes das Stellglied in eine Position bewegen, in der es außer Eingriff mit dem Stellelement ist, beispielsweise über eine Unterbrechung in seiner Außenverzahnung.

Fällt der Strom am Stellantrieb vor der Kraftumkehr des Federelementes aus, läßt sich das Stellelement durch das Federelement und die Last automatisch in die "offen"-Position bewegen. In diesem Falle ist ein Überdrehen des Stellgliedes in die Zone ohne Kraftübertragung nicht erforderlich.

In einer weiteren Ausführungsvariante des der Erfindung zugrundeliegenden Gedankens läßt sich anstelle abgestimmter Federelemente auch eine elektromagnetische Kopplung bzw. Entkopplung realisieren.

### Zeichnung

Anhand der Zeichnung wird die Erfindung nachstehend näher erläutert.

Es zeigt:
- Figur 1: den schematischen Aufbau eines konventionellen Stellantriebes mit Schnekkengetriebe, Zahnstangen und Ritzel,
- Figuren 2.1 Bis 2.4: eine schematische Darstellung des Entkopplungsprinzipes einer Ritzel/Zahnstangenanordnung, wobei das Ritzel koaxial zu einem Schneckenrad aufgenommen ist,
- Figur 3: eine Darstellung der Überlagerung der Kraftverläufe von Federelement, fiktiver Last und resultierender Last für den Stellantrieb und
- Figur 4: den prinzipiellen Aufbau eines elektromagnetischen Federsystems zur Not-Entkopplung im bestromten und im stromlosen Zustand.

### Ausführungsvarianten

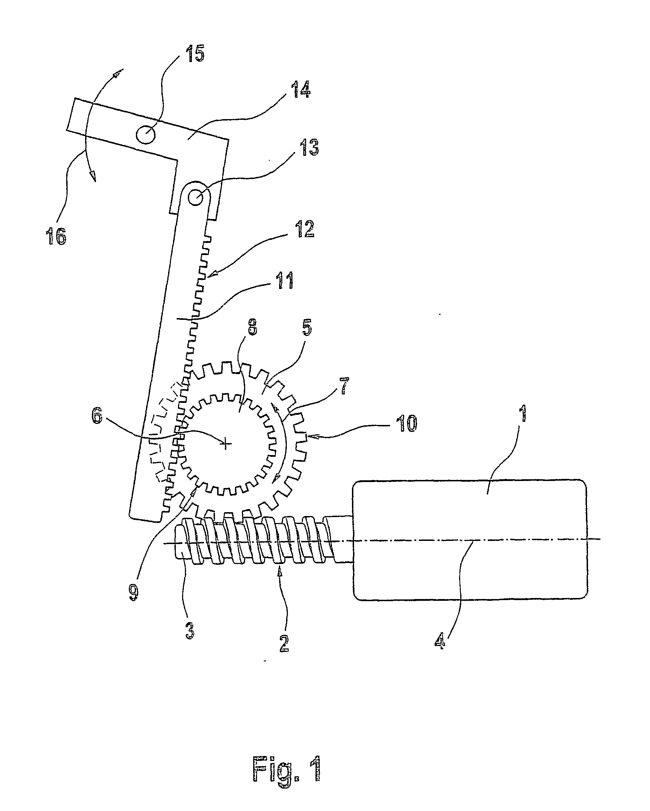

Aus der Darstellung gemäß Figur 1 geht der schematische Aufbau eines konventionellen Stellantriebes mit Schneckengetriebe, Zahnstange und Ritzel näher hervor.

In dieser Darstellung eines heute typischen Stellantriebes mit Stellmotor 1 und Schneckengetriebe 3, 5 und einem Stellelement 11 in Form einer Zahnstange treibt der Stellmotor 1 das Schneckengetriebe 3, 5 an. Die Ankerwelle 2 des Stellmotors 1, die mit dessen Symmetrielinie 4 zusammenfällt, ist mit einem Schneckengewinde versehen, welches mit einer Außenverzahnung 10 am Schneckenrad 5 zusammenarbeitet. Die Rotationsachse 6 des Schneckenrades 5 verläuft senkrecht zur Zeichenebene; d.h. das Schneckenrad 5 und die Schnecke 3 sind im rechten Winkel in bezug aufeinander orientiert. Koaxial und starr zum Schneckenrad 5 ist eine Abtriebskomponente 8 in Gestalt eines außenverzahnten Ritzels vorgesehen. Je nach Drehrichtung des Stellmotors 1 kann über die eingestellte Drehrichtung eine Bewegung des Schneckenrades 5 in eine der Richtungen eingeleitet werden, die mit dem Doppelpfeil 7 gekennzeichnet ist. Die Abtriebskomponente 8 arbeitet mit ihrer Außenverzahnung 9 mit einer Zahnstange 11 zusammen, die in der Darstellung gemäß Figur 1 als Stellelement dient. Die Zahnstange 11 ist an ihrer der Abtriebskomponente 8 zuweisenden Seite mit einer Verzahnung 12 versehen. Die als Stellement 11 fungierende Zahnstange ist an ihrem oberen Ende 13 drehbar an einem L-förmigen Hebel 14 aufgenommen. Der Hebel seinerseits ist um eine Schwenkachse 15 bewegbar; die Schwenkbewegung ist durch den Doppelpfeil, der mit Bezugszeichen 16 versehen ist, angedeutet.

Mit der in Figur 1 schematisch wiedergegebenen Anordnung läßt sich eine Linearbewegung entsprechend der vertikalen Auf- und Abbewegung der als Stellelement fungierenden Zahnstange 11 gemäß des Doppelpfeils 16 erzeugen. Anstelle einer Linearbewegung kann mittels eines Stellelementes 11 auch eine Rotationsbewegung herbeigeführt werden. Bei diesen üblichen Stellern ist bei Stromausfall am Stellmotor 1 eine Verstellung entweder gar nicht oder nur mit relativ hohen Kräften möglich. Dies birgt den Nachteil, daß es für zahlreiche potentielle Anwendungsfälle eines solcherart beschaffenen Stellantriebes ein erhebliches Problem darstellt, eine Verstellung am Stellelement 11 bei Stromausfall vorzunehmen. Dies kann insbesondere dann kritisch werden, wenn bei Arbeitsmaschinen, zum Beispiel Abgasturboladern, die im Abgassystem einer Verbrennungskraftmaschine mit stark schwankenden Betriebszuständen aufgenommen sind (-VTG-Lader), Verstellumgen am Leitschaufelring zum Beispiel vom geschlossenen in den offenen Zustand bei Stromausfall vorgenommen werden müssen. Ein Öffnen eines einmal geschlossenen Leitschaufelrings kann zum Beispiel bei einem Abgasturbolader mit variabler Turbinengeometrie bei plötzlichem Gasgeben an der Verbrennungskraftmaschine dringend erforderlich sein, um diese im Abgassystem einer Verbrennungskraftmaschine aufgenommene Arbeitsmaschine vor Beschädigungen zu schützen.

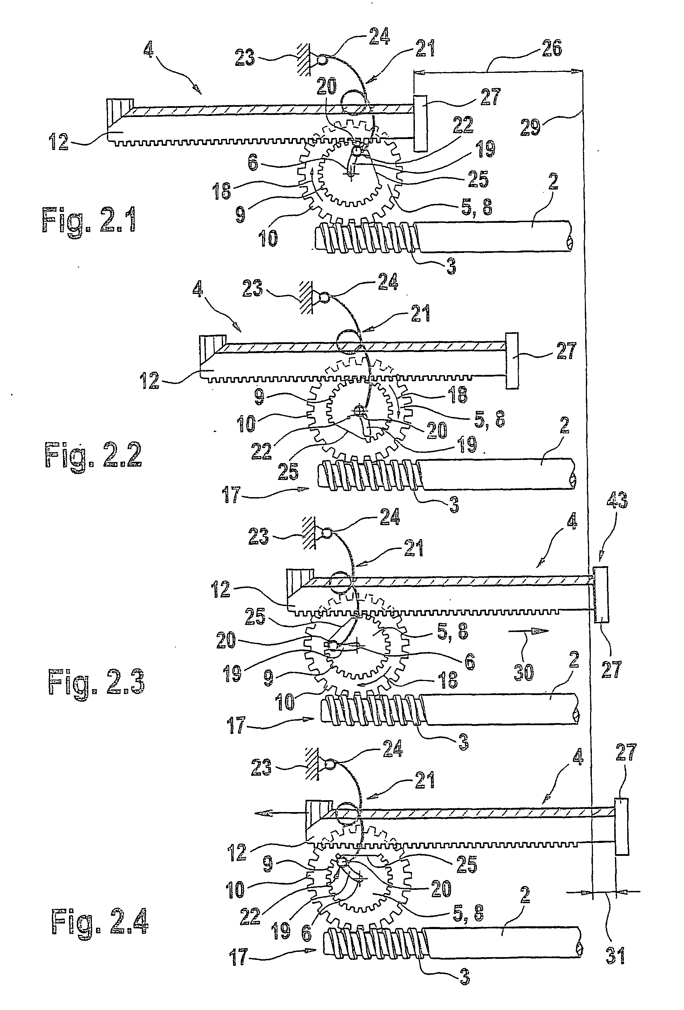

Aus dem Figurenzyklus Figur 2.1 bis 2.4 geht eine schematische Darstellung eines erfindungsgemäß vorgeschlagenen Entkoppelungsprinzips einer Ritzel-/Zahnstangenanordnung näher hervor, wobei das als Abtriebskomponente fungierende außenverzahnte Ritzel koaxial zum Schneckenrad aufgenommen ist.

Gemäß der Darstellung aus Figur 2.1 ist an einer Ankerwelle 2 eines in Figur 2.1 nicht dargestellten Stellmotors 1 das Gewinde einer Schnecke 3 ausgebildet. Dieses kämmt mit einem Außengewinde 10 eines Schneckenrades 5, welches um eine Rotationsachse 6 rotiert. Koaxial zum Schneckenrad 5 des Schneckengetriebes 3, 5 ist eine Abtriebskomponente 8 dargestellt, die in der Darstellung gemäß Figur 2.1 als ein außenverzahntes Ritzel ausgebildet ist, dessen Außenverzahnung 9 in einem Bereich 25 unterbrochen ist. In der Darstellung gemäß Figur 2.1 ist im als Abtriebskomponente dienenden außenverzahnten Ritzel 8 eine Ausnehmung 19 in Gestalt einer Längsnut eingelassen. Eine Begrenzung der Ausnehmung 19 fällt mit der Rotationsachse 6 von Schneckenrad 5 und Abtriebskomponente 8 zusammen, während die außenliegende Begrenzung der als Längsnut beschaffenen Ausnehmung 19, die im Schneckenrad 5 oder in der Abtriebskomponente 8 ausgebildet sein kann, unterhalb der Außenverzahnung 9 endet.

Oberhalb eines mit Bezugszeichen 11 bezeichneten Stellelementes, zum Beispiel eine mit einer Außenverzahnung 12 versehenen Zahnstange, ist an einem Festlager 23 in einer stationären Anlenkung 24 ein Federelement 21 eingehangen. Das Federelement 21 kann zum Beispiel als eine Schlingfeder, eine Spiralfeder oder dergleichen ausgeführt sein, die mit ihrem dem Festlager 23 gegenüberliegenden Ende in einem bewegbaren Anlenkpunkt 22 in Gestalt eines in der Ausnehmung 19 geführten Stiftes 20 gelagert ist.

Die als Stellelement 11 fungierende Zahnstange ist mit einem Anschlag 27 versehen, der in der Darstellung gemäß Figur 2.1 sich in einem mit Bezugszeichen 26 befindlichen Abstand von einer Bezugslage 29 entfernt befindet. An dem Anschlag 27 gegenüberliegenden Ende der als Stellelement 11 fungierenden Zahnstange ist eine Schräge ausgebildet. Gemäß der Darstellung in Figur 2.1 befindet sich das Stellelement 11 in seiner ersten Extremstellung 42, die zum Beispiel der Stellung entsprechen kann, in der an einem am Abgassystem einer Verbrennungskraftmaschine aufgenommenen Abgasturbolader mit variabler Turbinengeometrie der Leitschaufelring in seine Offenstellung gestellt ist. Bei bestromtem Stellmotor 1, d.h. im Normalbetrieb, ist das Federelement 21 relativ wenig gespannt.

In Figur 2.2 hat sich, bedingt durch die Drehung der Ankerwelle 2 mit daran aufgenommenem Schneckengetriebe, welches mit der Schneckenverzalmung 10 des Schneckenrades 5 kämmt, das als Abtriebskomponente fungierende außenverzahnte Ritzel 8 um gut eine viertel Umdrehung in Drehrichtung 18 weiterbewegt. Während dieser Vierteldrehung hat sich der Anschlag 27 der als Stellelement 11 fungierenden, mit einer Verzahnung 12 versehenen Zahnstange auf die Bezugskante 29 zubewegt. Während dieser Vierteldrehung stehen die Außenverzahnung 9 des als Abtriebskomponente dienenden außenverzahnten Ritzels und die Verzahnung 12 des zahnstangenförmig konfigurierten Stellelementes 11 in Eingriff miteinander. Während dieser in Figur 2.2 beschriebenen Vierteldrehung hat sich die Ausnehmung 19, sei sie in der Abtriebskomponente 8 oder im Schneckenrad 5 ausgebildet, entsprechend gedreht, wobei das als Schlingfeder beispielsweise konfigurierte Federelement 21 langsam weiter gespannt wird. Während dieser Teildrehung hat sich der in der Ausnehmung 19 bewegbar geführte Stift 20, der die bewegbare Anlenkung 22 des Federelementes 21 darstellt, in der Ausnehmung 19 in Richtung auf die Rotationsachse 6 des Schneckenrades 5 bzw. der Abtriebskomponente 8 hinzubewegt, so daß das Federelement spätestens nach etwa einer halben Umdrehung des Schneckenrades 5 bzw. der Abtriebskomponente 8 maximal gespannt ist. Dieser Bewegungsablauf geht mit dem Vorteil einher, daß das Federelement 21 bei weiterer Drehung bis zum Erreichen der zweiten Extremstellung 43 (vgl. Figur 2.3) der als Stellelement 11 fungierenden Zahnstange den Stellmotor etwas unterstützt, was zum Beispiel dahingehend ausgenutzt werden kann, daß bei dieser Lage das Federelement 21 zusammen mit dem Stellmotor 1 einen Leitschaufelring eines Abgasturboladers beim Bremsen geschlossen hält. Beim Zurückdrehen aus der in Figur 2.2 gezeigten Lage würde sich das Federelement wieder entspannen, der Stift 20 in der Nut 19 wieder zurücklaufen.

Aus der Darstellung gemäß Figur 2.3 geht hervor, daß sich der Anschlag 27 des Stellelementes 11 bis über die Bezugskante 29 hinausbewegt hat, d.h. das Stellelement 11 hat seine zweite Extremstellung 43 angenommen. In der in Figur 2.3 gezeigten Darstellung sind die Verzahnung 12, die außenliegend am Stellelement 11 angebracht ist, und die Außenverzahnung 9 des als Abtriebskomponente dienenden Ritzels 8 gerade noch in Eingriff. Fällt in dieser in Figur 2.3 gezeigten Extremstellung 43 der Strom am Stellmotor 1 - hier nicht dargestellt - aus, bewirkt das Federelement durch seine Vorspannung eine Überdrehung des Schneckenrades 5 bzw. des außenverzahnten Ritzels 8 derart, daß das Ritzel 8 bzw. das Schneckenrad 5 so überdreht werden, daß kein Zahneingriff zwischen der Außenverzahnung 9 der Abtriebskomponente 8 und der Verzahnung 12 des Stellelementes 11 mehr auftritt. Dies erfolgt durch weitere Drehung der Abtriebskomponente 8 bzw. des Schneckenrades 5 in Drehrichtung 18, so daß der nicht verzahnte Bereich 25 der Abtriebskomponente unterhalb der Außenverzahnung 12 des zahnstangenförmig konfigurierten Stellelementes 11 liegt. Dadurch wird das Stellelement 11 in bezug auf die Abtriebskomponente 8 bzw. das Schneckenrad 5 frei beweglich.

In Figur 2.4 ist dargestellt, daß das zahnstangenförmig konfigurierte Stellelement 11 in bezug auf die Abtriebskomponente 8 bzw. das Schneckenrad 5 frei beweglich ist. Der Anschlag 27 des Stellelementes 11 hat die Bezugskante 29 um einen Weg 31 überschritten, in welchem zwischen dem Stellelement 11 der Abtriebskomponente 8 bzw. dem Schneckenrad 5 kein Zahneingriff, d.h. keine Kraftübertragung mehr vorliegt. In diesem Zustand läuft die am Stellelement 11 ausgebildete Schräge auf eine Windung der Schlingfeder 21 auf, so daß die sich außer Eingriff befindliche Zahnstange 11 aus ihrer zweiten Extremstellung 43 gemäß des in Figur 2.4 an der Schräge eingezeichneten Pfeils wieder in Richtung auf ihre erste Extremstellung 42 zubewegt wird. Dies wird dadurch bewirkt, daß die Schlingfeder 21, angelenkt beim stationären Festlager 23 und beweglich geführt in der Ausnehmung 19, noch nicht völlig entspannt ist und ihr eine Restspannkraft innewohnt.

Die dem als Schlingfeder beispielsweise ausgebildeten Federelement 21 noch innewohnende restliche Federkraft reicht nicht mehr aus, das Schneckenrad 5 bzw. die Abtriebskomponente 8 entgegen dem Rastmoment des Stellmotors 1 und die auftretenden Verluste im Schneckentrieb 3, 5 weiterzudrehen, so daß das Getriebe in der in Figur 2.4 gezeigten Stellung verharrt und die als Stellelement 11 fungierende Zahnstange sich zum Beispiel durch die am Abgasturbolader auftretenden Schaufelkräfte im Leitschaufelring frei bewegen läßt. Das Schneckengetriebe 3, 5 ist hinsichtlich seiner Zahngeometrien so ausgelegt, daß keine Selbsthemmung auftritt.

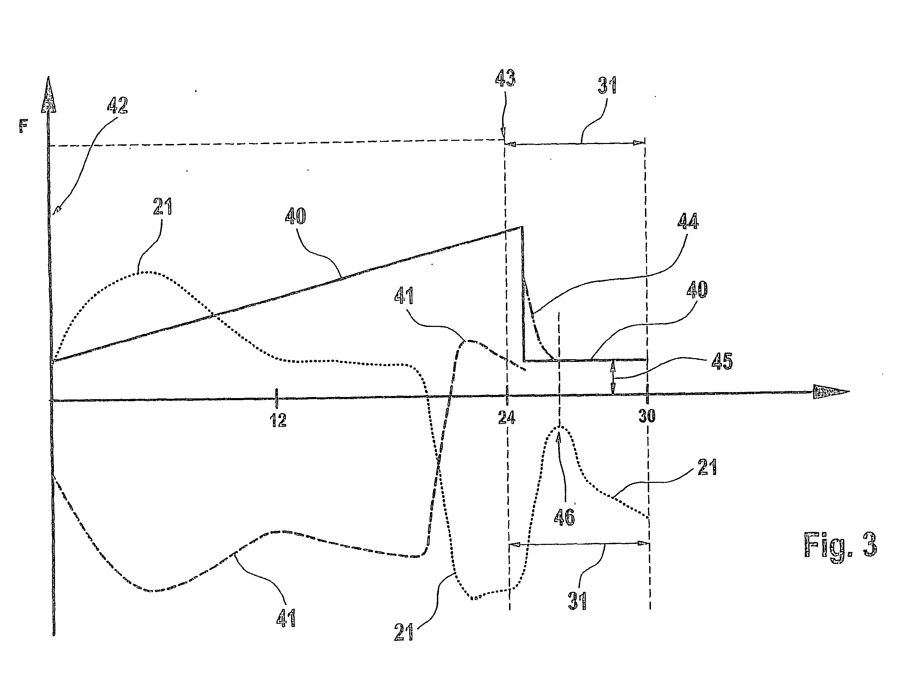

Aus der Darstellung gemäß Figur 3 geht eine Darstellung der Überlagerung der Kraftverläufe von Federelement, einer fiktiven Last und der resultierenden Last für den Stellantrieb, aufgetragen über dem Weg, näher hervor.

Wie aus der Darstellung gemäß Figur 3 hervorgeht, ist das Federelement 21 bereits in der ersten Extremstellung 42, was der Position offen der als Stellelement 11 fungierenden Zahnstange entspricht, gespannt, so daß der Stellmotor 1 gegen die Federkraft und die fiktive Last 40 arbeiten muß. Erfolgt nun eine Bewegung der Abtriebskomponente 8 bzw. des Schneckenrades 5 bzw. der Zahnstange 11 in Richtung auf die zweite Extremstellung 43, welche einer geschlossenen Position entspricht, nimmt die Last gemäß des Kurvenverlaufes 40 näherungsweise linear zu und das Federelement wird weiter gespannt, d.h. auch die dem Stellmotor 1 entgegenwirkende Federkraft nimmt weiter zu. Durch die Drehung der als außenverzahntes Ritzel beschaffenen Abtriebskomponente 8 ändert sich der Winkel des Federelementes zur als Stellelement 11 fungierenden Zahnstange und der Stift 20, über welchen das Federelement 21 mit der Abtriebskomponente 8 verbunden ist, wandert in der nutförmig beschaffenen Ausnehmung 19 nach innen. Infolgedessen nimmt die Federkraft mit zunehmendem Weg des Stellelementes 11 in Richtung auf die zweite Extremstellung 43 ab einem gewissen Punkt wieder ab und bleibt dann über einen größeren Weg bzw. Winkelbereich in bezug auf die Abtriebskomponente 8 nahezu konstant. Da jedoch die Last linear weiter ansteigt, ergibt sich ein etwas geschwungener Verlauf der resultierenden Motorlast, gekennzeichnet durch den Kurvenzug 41.

Kurz vor Erreichen der zweiten Extremstellung 43 rutscht der Stift 20 in der Ausnehmung 19 an der Abtriebskomponente 8 wieder nach außen und die Federvorspannung des Federelementes 21 wirkt in entgegengesetzter Richtung. Dies bedeutet, daß der Stellmotor in diesem Wegbereich gegen die mittels des Federelementes 21 aufgebrachte Federkraft bremsen muß. Bis zum Erreichen der zweiten Extremstellung 43 nimmt dann die Brems-Motorlast wieder etwas ab, da die Last weiter ansteigt und die Federkraft etwas abnimmt. Im bestromten Fall des Stellmotors 1 bewegt sich das System stets zwischen der ersten und der zweiten Extremstellung 42 bzw. 43.

Fällt nun der Strom in der zweiten Extremstellung 43 oder nach der Zugrichtungsumkehr des Federelementes 21 aus, so zieht das Federelement 21 das als Abtriebskomponente 8 fungierende außenverzahnte Ritzel in die mit Bezugszeichen 31 bezeichnete Zone, und zwar so weit, bis die Zähne der Außenverzahnung 10 der Abtriebskomponente 8 und die Verzahnung 12 der als Stellelement 11 fungierenden Zahnstange nicht mehr ineinander greifen.

Gegen die verbleibenden Schneckenverluste 45 dreht sich das als Abtriebskomponente 8 fungierende Ritzel noch ein Stück weiter bis in seine Endposition, vergleiche Figur 2.4. Dabei dienst eine am Ende der Zahnstange 11 angebrachte Schräge dazu, diese in Ausnutzung der restlich vorhandenen Federkraft wieder ein Stück in Richtung der ersten Extremstellung 42 zu schieben und somit einen begrenzten Verstellweg bei einem stromlosen Antrieb zu ermöglichen.

Fällt der Strom am Stellmotor 1 hingegen in einer Drehstellung der Abtriebskomponente 8 bzw. des Schneckenrades 5 vor der Kraftumkehr des Federelementes 21 aus, bewegt sich die als Stellelement 11 fungierende Zahnstange durch Last und Feder automatisch in die erste Extremstellung 42 - ein Überdrehen der Abtriebskomponente 8 in die Zone 31 ist nicht erforderlich.

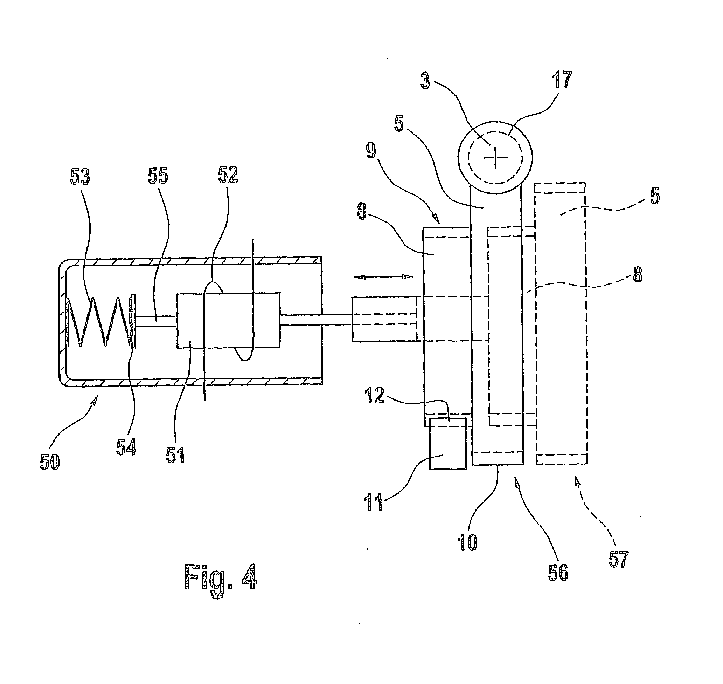

Aus der Darstellung gemäß Figur 4 geht der prinzipielle Aufbau eines elektromagnetischen Federsystems zur Entkopplung im Notfall im bestromten und im stromlosen Zustand näher hervor.

In dieser Darstellung wird ein Federelement 53 innerhalb eines elektromagnetisch arbeitenden Ventils 50 von einer stromdurchflossenen Spule 52 im gespannten Zustand gehalten. Die Federvorspannung wird durch den die stromdurchflossene Spule 52 durchsetzenden Eisenkern 51 aufgebracht, der durch eine Stange 55 mit daran vorgesehenem Tellerelement 54 das Federelement 53 innerhalb des Gehäuses des elektromagnetisch arbeitenden Ventils 50 beaufschlagt. Bei Stromausfall bricht das elektromagnetische Feld schlagartig zusammen und über den Eisenkern 51 drückt das Federelement 53 einen Zapfen gemäß des Doppelpfeils in horizontale Richtung. Dadurch kann die mit Bezugszeichen 56, dem bestromten Zustand des elektromagnetischen Ventils 50 wiedergebend bezeichnete Eingriffsstellung von Schnecke 3 und Schneckenrad 5 aufgehoben werden, indem das Schneckenrad 5 relativ verschoben wird. Dadurch gerät einerseits das Schneckenrad 5 außer Eingriff mit der Schnecke 3, andererseits gerät die Außenverzahnung 9 der Abtriebskomponente 8 außer Eingriff mit der Verzahnung 12 des zahnstangenförmig ausgebildeten Stellelementes 11. Das Federelement drückt die koaxiale Anordnung aus Abtriebskomponente 8 und Schneckenrad 5 in die mit Bezugszeichen 57 bezeichnete, dem stromlosen Zustand entsprechende Position. Zur Verstellung der hier in Figur 4 schraffiert dargestellten, als Stellelement 11 -fungierenden Zahnstange wäre ein weiteres stromlos funktionierendes Stellelement vorzusehen.

### Bezugszeichenliste

- 1: Stellantrieb
- 2: Ankerwelle
- 3: Schnecke
- 4: Symmetrielinie
- 5: Schneckenrad
- 6: Schneckenradachse
- 7: Drehrichtung
- 8: Abtriebskomponente (Ritzel)
- 9: Außenverzahnung
- 10: Außenverzahnung Schneckenrad 5
- 11: Zahnstange
- 12: Verzahnung
- 13: Anlenkpunkt Zahnstange
- 14: Hebel
- 15: Schwenkachse
- 16: Schwenkrichtung
- 17: Schneckengewinde
- 18: Drehrichtung
- 19: Ausnehmung
- 20: Stift
- 21: Federelement
- 22: bewegbare Anlenkung
- 23: Festlager Federelement
- 24: stationäre Anlenkung
- 25: unverzahnter Abschnitt
- 26: Stellhub
- 27: Anschlag
- 28: Verschwenkbereich
- 29: Bezugshub
- 30: Bewegungsrichtung Zahnstange
- 31: Zone

- 40: Lastverlauf
- 41: resultierende Motorlast
- 42: erste Extremstellung (offen)
- 43: zweite Extremstellung (geschlossen)
- 44: Rückstellsprung
- 45: Schneckenverluste
- 46: Federkraft bei "stromlosem Zustand"

- 50: elektromagnetisches Ventil
- 51: Eisenkern
- 52: stromdurchflossene Spule
- 53: Federelement
- 54: Telleransatz
- 55: Stange
- 56: bestromter Zustand
- 57: stromloser Zustand

## Patentansprüche

1. Stellantrieb mit einem Stellmotor (1), der abtriebseitig ein Stellgetriebe (3, 5) antreibt, welches ein antriebseitiges Stellglied (3) und ein abtriebseitiges Stellglied (5) umfaßt und das abtriebseitige Stellglied (5) mit einem Stellelement (11) zusammenarbeitet, über welches Kraft- oder Arbeitsmaschinen in ihrem Betriebsverhalten beeinflußbar sind, **dadurch gekennzeichnet, daß** dem antriebs- oder dem abtriebsseitigen Stellglied (3, 5) eine Abtriebskomponente (8) zugeordnet ist, die einen kraftübertragungsfreien Bereich (25) umfaßt, und an der ein Federelement (21) in einer Ausnehmung (19) bewegbar aufgenommen ist.

2. Stellantrieb gemäß Anspruch 1, **dadurch gekennzeichnet, daß** die Abtriebskomponente (8) koaxial und starr zum abtriebseitigen Stellglied (5) gelagert ist.

3. Stellantrieb gemäß Anspruch 1, **dadurch gekennzeichnet, daß** die Abtriebskomponente (8) als Ritzel mit Außenverzahnung (9) ausgebildet ist.

4. Stellantrieb gemäß Anspruch 1, **dadurch gekennzeichnet, daß** das Federelement (21) als Schlingfeder ausgebildet ist.

5. Stellantrieb gemäß Anspruch 1, **dadurch gekennzeichnet, daß** die Ausnehmung (19) in der Abtriebskomponente (8) oder dem abtriebseitigen Stellglied (5) als Nut ausgebildet ist.

6. Stellantrieb gemäß Anspruch 5, **dadurch gekennzeichnet, daß** ein Anschlag der Nut (19) mit der Rotationsachse (3) von Abtriebskomponente (8) oder abtriebseitigem Stellglied (5) zusammenfällt.

7. Stellantrieb gemäß Anspruch 5, **dadurch gekennzeichnet, daß** das Federelement (21) an seinem stationären Anlenkpunkt (24) in einem Abstand zur Rotationsachse (6) der Abtriebskomponente (8) oder des abtriebseitigen Stellglieds (5) aufgenommen ist.

8. Stellantrieb gemäß Anspruch 1, **dadurch gekennzeichnet, daß** während der Drehung der Abtriebskomponente (8) das Federelement (21) seine Maximalauslenkung bei etwa einer Halbumdrehung von Abtriebskomponente (8) oder abtriebseitigem Stellglied (5) einnimmt.

9. Stellantrieb gemäß Anspruch 8, **dadurch gekennzeichnet, daß** bei Stromausfall am Stellmotor (1) vor Erreichen der Halbumdrehung der Abtriebskomponente (8), das Stellelement (11) durch Last und Kraft des Federelementes (21) in Richtung seiner ersten Extremstellung (42) verstellt wird.

10. Stellantrieb gemäß Anspruch 8, **dadurch gekennzeichnet, daß** bei Stromausfall am Stellmotor (1) nach Vollendung der Halbumdrehung der Abtriebskomponente (8) die Abtriebskomponente (8) in Drehrichtung (18) überdreht wird, so daß Stellelement (11) und Abtriebskomponente (8) in einem Bereich (25) außer Eingriff sind.

11. Stellantrieb gemäß Anspruch 1, **dadurch gekennzeichnet, daß** das Stellelement 11 mit einer Auflaufschräge versehen ist, welche bei Anlage am Federelement (21) eine Verstellbarkeit des Stellelementes (11) ermöglicht.

12. Stellantrieb mit einem Stellmotor (1), der abtriebseitig ein Stellgetriebe (3, 5) antreibt, welches ein antriebseitiges Stellglied (3) und ein abtriebseitiges Stellglied (5) umfaßt und das abtriebseitige Stellglied (5) mit einem Stellelement (11) zusammenarbeitet, über welches Kraft- oder Arbeitsmaschinen in ihrem Betriebsverhalten beeinflußbar sind, **dadurch gekennzeichnet, daß** einem Federelement (53) in einem elektromagnetischen Ventil (50) eine Spule (52) zugeordnet ist und der als Spulenkern fungierende Eisenkern (51) die Stellglieder (3, 5) bzw. Abtriebskomponente (8) und Stellelement (11) bei Stromausfall an der Spule (52) außer Eingriff bringt.

## Claims

1. Actuating drive, with a servomotor (1) which on the output side drives an actuating gear (3, 5) which comprises a drive-side actuator (3) and output-side actuator (5), the output-side actuator (5) cooperating with an actuating element (11), via which engines or working machines can be influenced in their operating behaviour, **characterized in that** the drive-side or the output-side actuator (3, 5) is assigned an output component (8) which comprises a region (25) free of force transmission and on which a spring element (21) is received movably in a recess (19).

2. Actuating drive according to Claim 1, **characterized in that** the output component (8) is mounted coaxially and rigidly with respect to the output-side actuator (5).

3. Actuating drive according to Claim 1, **characterized in that** the output component (8) is designed as a pinion with external toothing (9).

4. Actuating drive according to Claim 1, **characterized in that** the spring element (21) is designed as a wrap spring.

5. Actuating drive according to Claim 1, **characterized in that** the recess (19) in the output component (8) or in the output-side actuator (5) is designed as a groove.

6. Actuating drive according to Claim 5, **characterized in that** a stop of the groove (19) coincides with the axis of rotation (6) of the output component (8) or of the output-side actuator (5).

7. Actuating drive according to Claim 5, **characterized in that** the spring element (21) is received at its stationary articulation point (24) at a distance from the axis of rotation (6) of the output component (8) or of the output-side actuator (5).

8. Actuating drive according to Claim 1, **characterized in that**, during the rotation of the output component (8), the spring element (21) assumes its maximum deflection at about half a revolution of the output component (8) or of the output-side actuator (5).

9. Actuating drive according to Claim 8, **characterized in that** in the event of a power failure at the servomotor (1) before half the revolution of the output component (8) is reached, the actuating element (11) is adjusted in the direction of its first end position (42) by means of the load and force of the spring element (21).

10. Actuating drive according to Claim 8, **characterized in that**, in the event of a power failure at the servomotor (1) after the completion of half the revolution of the output component (8), the output component (8) is overrotated in the direction of rotation (18), so that actuating element (11) and output component (8) are out of engagement in a region (25).

11. Actuating drive according to Claim 1, **characterized in that** the actuating element (11) is provided with a run-on slope which allows an adjustability of the actuating element (11) in the case of bearing contact against the spring element (21).

12. Actuating drive, with a servomotor (1) which on the output side drives an actuating gear (3, 5) which comprises a drive-side actuator (3) and an output-side actuator (5), the output-side actuator (5) cooperating with an actuating element (11), via which engines or working machines can be influenced in their operating behaviour, **characterized in that** a coil (52) is assigned to a spring element (53) in an electromagnetic valve (50), and the iron core (51) functioning as a coil core brings the actuators (3, 5) or the output component (8) and the actuating element (11) out of engagement in the event of a power failure at the coil (52).

## Revendications

1. Actionneur comportant un moteur de réglage (1) entraînant du côté de la sortie un mécanisme de réglage (3, 5) comprenant un organe d'entrée (3) et un organe de sortie (5), l'organe de sortie (5) coopérant avec un élément de réglage (11) qui influence des moteurs ou des machines de travail dans leur comportement de fonctionnement,
**caractérisé en ce qu'**
à l'organe d'entrée ou de sortie (3, 5) est associé un composant de sortie (8) comprenant une zone sans transmission de forces (25) et qui loge de façon mobile un élément de ressort (21) dans un évidement (19).

2. Actionneur selon la revendication 1,
**caractérisé en ce que**
le composant de sortie (8) est logé de façon coaxiale et fixe par rapport à l'organe de sortie (5).

3. Actionneur selon la revendication 1,
**caractérisé en ce que**
le composant de sortie (8) a la forme d'un pignon à denture extérieure (9).

4. Actionneur selon la revendication 1,
**caractérisé en ce que**
l'élément de ressort (21) est un ressort enroulé.

5. Actionneur selon la revendication 1,
**caractérisé en ce que**
l'évidement (19) dans le composant de sortie (8) ou l'organe de sortie (5) est une rainure.

6. Actionneur selon la revendication 5,
**caractérisé en ce qu'**
une butée de la rainure (19) coïncide avec l'axe de rotation (3) du composant de sortie (8) ou de l'organe de sortie (5).

7. Actionneur selon la revendication 5,
**caractérisé en ce que**
l'élément de ressort (21) a son point d'articulation stationnaire (24) logé à une certaine distance de l'axe de rotation (6) du composant de sortie (8) ou de l'organe de sortie (5).

8. Actionneur selon la revendication 1,
**caractérisé en ce que**
pendant la rotation du composant de sortie (8), l'élément de ressort (21) adopte son orientation maximale à environ une demi-rotation du composant de sortie (8) ou de l'organe de sortie (5).

9. Actionneur selon la revendication 8,
**caractérisé en ce que**
dans le cas d'une chute de courant au niveau du moteur de réglage (1) avant d'avoir atteint la demi-rotation du composant de sortie (8), l'élément de commande (11) est déplacé par la charge et la force de l'élément de ressort (21) en direction de sa première position d'extrémité (42).

10. Actionneur selon la revendication 8,
**caractérisé en ce que**
dans le cas d'une chute de courant au niveau du moteur de réglage (1) après accomplissement de la demi-rotation du composant de sortie (8), le composant de sortie (8) tourne en supplément dans la direction de rotation (18), de telle sorte que l'élément de réglage (11) et le composant de sortie (8) ne sont plus engrenés dans une zone (25).

11. Actionneur selon la revendication 1,
**caractérisé en ce que**
l'élément de réglage (11) est pourvu d'un plan incliné qui permet la mobilité de l'élément de réglage (11) lorsqu'il repose sur l'élément de ressort (21).

12. Actionneur comportant un moteur de réglage (1), qui entraîne du côté de la sortie un mécanisme de réglage (3, 5) comprenant un organe d'entrée (3) et un organe de sortie (5), l'organe de sortie coopérant avec un élément de réglage (11) qui influence des moteurs ou des machines de travail dans leur comportement de fonctionnement,
**caractérisé en ce qu'**
une bobine (52) est associée à un élément de ressort (53) dans une soupape électromagnétique (50), et le noyau de fer (51) faisant office de noyau de la bobine fait en sorte que les organes (3, 5) ou le composant de sortie (8) et l'élément de réglage (11) ne soient plus engrenés lors d'une chute de courant au niveau de la bobine (52).
